**Europäisches Patentamt**

**European Patent Office**

**Office européen des brevets**

(19)

(11) Veröffentlichungsnummer: **0 123 985**
**A2**

# (12) EUROPÄISCHE PATENTANMELDUNG

(21) Anmeldenummer: **84104150.2**

(22) Anmeldetag: **12.04.84**

(51) Int. Cl.³: **C 02 F 11/02, C 02 F 3/32**

(30) Priorität: **27.04.83 DE 3315279**

(43) Veröffentlichungstag der Anmeldung: **07.11.84**
**Patentblatt 84/45**

(84) Benannte Vertragsstaaten: **AT BE CH DE FR GB IT LI LU NL SE**

(71) Anmelder: **Senekovic, Roman, sen., Bommerholzer Strasse 98, D-5810 Witten (DE)**

(72) Erfinder: **Senekovic, Roman, sen., Bommerholzer Strasse 98, D-5810 Witten (DE)**
Erfinder: **Senekovic, Roman, jun., Bommerholzer Strasse 98, D-5810 Witten (DE)**

(74) Vertreter: **Patentanwälte Wenzel & Kalkoff, Grubes Allee 26 Postfach 730466, D-2000 Hamburg 73 (DE)**

(54) **Verfahren zur Entgiftung von Klärschlamm.**

(57) Die Erfindung betrifft ein Verfahren zum Entgiften von Klärschlamm, bei dem Schadstoffe, wie zum Beispiel Schwermetalle, von pflanzlichen Lebewesen aufgenommen, aus dem Klärschlamm entfernt und in gesonderten Anlagen vernichtet werden. Durch mehrfache Wiederholung einer Bepflanzung wird der anfänglich giftige Klärschlamm soweit entgiftet, daß er als Düngung für die Landwirtschaft und Forstwirtschaft zur Verfügung steht und ohne Gefahr für die Umwelt auf natürlichem Boden eingesetzt werden kann.

EP 0 123 985 A2

0123985

Patentanwälte
Wenzel & Kalkoff
Ruhrstraße 26
Postfach 2448
5810 Witten/Ruhr

3585 KA/Be

Anmelder:

Roman Senekovic sen.
Bommerholzer Str. 98
5810 Witten-Bommerholz

Bezeichnung:

Verfahren zur Entgiftung
von Klärschlamm

Die Erfindung betrifft ein Verfahren zur Entgiftung von Klärschlamm, der bereits vorher den Weg durch eine normale Kläranlage genommen hat, also chemisch und biologisch aufbereitet ist. Seit einiger Zeit sind in diesen Klärschlämmen Spurenelemente in einer Konzentration vorhanden, deren Höhe sie als Schadstoffe erscheinen lassen; hier sind insbesondere Schwermetalle und Kadmium zu nennen.

Während noch vor Jahrzehnten dieser Klärschlamm ein begehrtes Düngemittel war, kann die Verwendung in der Land- und Forstwirtschaft durch unmittelbares Auflegen auf den land- oder forstwirtschaftlich genutzten Boden nicht mehr verantwortet werden. Unter sehr hohem Energieaufwand wird er deshalb getrocknet und anschließend bei hohen Temperaturen umweltneutral verbrannt.

Es ist Aufgabe der Erfindung ein Verfahren zur Entgiftung von Klärschlamm anzugeben, so daß die Verbrennung des Klärschlamms überflüssig wird, und so seine Verwendung für land- und forstwirtschaftlich genutzte Böden wieder gefahrlos möglich ist.

Zur Lösung dieser Aufgabe schlägt die Erfindung vor, daß der Klärschlamm auf einer wassundurchlässigen, entwässerbaren Fläche zur Trocknung abgelegt wird, daß in den Klärschlamm pflanzliche Lebewesen eingepflanzt und/oder einsät werden, daß nach einer vorgegebenen, insbesondere durch den Aufwuchs bestimmten Zeit der Bewuchs im wesentlichen rückstandslos entfernt wird, und daß anschließend die Bewachsung gegebenenfalls mehrfach wiederholt wird.

Es ist bekannt, daß Schadstoffe wie Schwermetalle in relativ hoher Konzentration in biologische Kreisläufe gelangen, in denen sie entweder aufgeschlossen und unschädlich gemacht werden oder sich anreichern. Ein derartiger biologischer Kreislauf findet zum Beispiel zwischen den Pflanzen eines Waldes und dem Waldboden statt. Das abgefallene Laub bildet am Waldboden eine Humusschicht, die die Nahrung für die Bäume selbst sowie für frischen Bewuchs bildet. Bei diesem Kreislauf tritt eine mehrfache chemische Umbildung der beteiligten Substanzen ein, im Verlauf dessen Schadstoffe aufgeschlossen und gegebenenfalls unschädlich gemacht werden. Es kann jedoch ebenso zu einer Anreicherung kommen, wenn die Schadstoffe von den Pflanzen zwar resorbiert, nicht jedoch abgebaut werden können.

Die Erfindung macht sich diese Erscheinung zunutze bzw. reagiert entsprechend darauf. Grundsätzlich bedient sich das Verfahren gemäß der Erfindung der Erscheinung, daß Pflanzen ein hohes Maß an Schadstoffen zunächst aufnehmen, wobei später untersucht werden kann, ob die aufgenommenen Schadstoffe abgebaut oder nur angereichert werden. Im Fall des Abbaus kann die Pflanze gefahrlos in den Klärschlamm eingearbeitet werden, da die aufgeschlüsselten Schadstoffe nicht mehr in giftiger Form vorhanden sind, sondern einer chemischen Bindung zugeführt werden können, in der sie keine schädliche Wirkung mehr haben. Insofern wird eine Fortsetzung einer biologischen Klärung durch pflanzliche Mittel herbeigeführt.

Im Fall einer Anreicherung, die durch chemische Analysen sehr leicht festzustellen ist, kommt es zu einer Anhäufung der Schadstoffe innerhalb der Pflanzen in schädlicher Form, so daß bei deren Einarbeitung in den Klärschlamm nichts gewonnen wäre. Insbesondere bei Schwermetallen überwiegt die Anreicherung, so daß zur Beseitigung dieser Gifte die Entfernung des Bewuchses aus dem Klärschlamm erforderlich ist.

Da der Klärschlamm in der Regel besonders locker ist, gelingt das Entfernen der Bepflanzung sehr leicht durch Ausreißen, es können jedoch auch ebensogut herkömmliche Erntemaschinen eingesetzt werden, die auf die komplette Entnahme einer Pflanze aus dem Boden eingerichtet sind. Die mit Schadstoffen überfrachteten, aus dem Klärschlamm entfernten Pflanzen werden einer Verbrennung bei hohen Temperaturen zugeführt, so daß keine weitere Belastung für die Umwelt aus diesen Bestandteilen entstehen kann. In der Regel wird nach dem Entfernen eines Bewuchses der Klärschlamm gewendet und neuerlich bepflanzt oder besät, wobei davon ausgegangen wird, daß die Belastung mit Schadstoffen mit einer einzigen Bepflanzung nicht weit genug herabgesetzt werden kann. Bei Pflanzen mit einer hohen Wachsgeschwindigkeit braucht die Entfernung der ersten Generation nicht abgewartet zu werden, vielmehr kann die zweite Bewuchsgeneration schon aufgebracht werden, wenn die erste noch nicht entfernt ist und deren Entfernung bei schon begonnem Wachsen der zweiten Generation ohne weiteres gelingt.

Diese Verhältnisse lassen erkennen, daß es im wesentlichen darauf ankommt, eine möglichst dichte Folge von Bepflanzungen zu erreichen, damit der Übergang von Nährstoffen und damit auch von Spurenelementen in schädlich hoher Konzentration in die Pflanzen besonders intensiv ist. Eine spürbare Schwächung des Klärschlammes ist nicht zu befürchten, da seine Ausstattung mit Nährstoffen besonders reich ist. Dabei muß ein Optimum gefunden werden zwischen der Aufnahme von Schadstoffen und der Zeitperiode bis zu dieser Aufnahme. Wenn also Pflanzen nach ca. zwei bis drei Monaten bezüglich ihrer Nahrungsaufnahme erlahmen, ist eine Neubepflanzung ratsam, während bei dann noch nennenswerter Nahrungsaufnahme der Verbleib dieser Bepflanzung ins Auge gefaßt werden kann.

Die kälteren Jahreszeiten stellen eine unerwünschten Unterbrechung der Bewuchsgenerationen dar, da es nicht auf die Erholung des Klärschlammes durch Brachliegen oder dergleichen ankommt, sondern auf die möglichst häufige Bepflanzung, damit ein möglichst großer Anteil an Schadstoffen auf natürliche Weise dem Klärschlamm entzogen wird. Unter diesem Gesichtspunkt kommt auch eine Durchführung des Verfahren mit all seinen Varianten unter Treibhausbedingungen in Frage, zumindest jedoch unter einem Foliengewölbe im Herbst und im Frühjahr.

Der Bewuchs des zur Entgiftung vorbereiteten Klärschlammbettes wird vorzugsweise nach dem Schadstoffbefall ausgesucht. Von vielen Pflanzen ist die bevorzugte Nahrungsaufnahme bekannt bzw. feststellbar, und aus Erfahrungswerten ist andererseits ermittelbar, mit welchen von den Pflanzen aufgenommenen Nahrungsstoffen auch die Schadstoffe in den Nahrungskreislauf der Pflanze übergehen. Nach Feststellung dieser Verhältnisse können bevorzugt Pflanzen ausgesucht werden, die zumindest in einigen Fällen einer Schadstoffbelastung eine gezielte Extraktion gestatten. Generell sind dabei Pflanzen zu bevorzugen, die stark holz- und faserbildend sind und für diese "Bautätigkeit" begierig Mineralstoffe aufnehmen; außerdem sind derartige Pflanzen starke Nahrungsaufnehmer, die als stark fruchtend bezeichnet werden können (Kürbis), also im Vergleich zu ihrer Holz- und Fasermenge einen hohen Fruchtanteil tragen. Denn auch die Bereitstellung eines hohen Fruchtanteils verlangt in der Regel nach einer besonders starken Nahrungsaufnahme. Insbesondere in Frage kommen Senf, Hanf, Brennessel, Sonnenblume, Lupine, Mais, Kamille, Wermut und sonstige Teearten, Erlen sowie weitere, insbesondere als minderwertig geltende Büsche und Sträucher. Auch kann Getreide den gewünschten Effekt herbeiführen, da die Fasern für die Halme besonders leistungsfähig sind und nach einer entsprechenden Nahrungsaufnahme verlangen. Ebenso kommen Hülsenfrüchte in Frage.

Das Wenden und Umsetzen des Klärschlammes nach der Entfernung einer Bepflanzungsgeneration kann mit Hilfe eines Baggers, durch Schleppflüge oder auch hochbeinige, herkömmliche Ackergeräte erfolgen, wobei das Umpflügen und Wenden hauptsächlich deshalb vorgenommen wird, damit alle Bereiche des Klärschlammbettes von der Reinigungsbepflanzung erfaßt werden.

Die Höhe eines Klärschlammbettes kann anfangs 80 cm betragen, wobei das Befahren anfangs wegen der Weichheit nicht möglich ist. Erst mit zunehmender Trocknung wird das Klärschlammbett tragfähig. Falls dennoch mechanische Geräte für die erste Bepflanzung eingesetzt werden sollen, bietet spätestens der wasserundurchlässige Untergrund beispielsweise in Form eines Betonbettes einem Fahrzeug ausreichenden Halt, falls die Bodenfreiheit dann noch ausreichend ist. Falls das Wenden und Umpflügen mit Schwierigkeiten verbunden ist, können gegebenenfalls nach der Entgiftung die oberen Bereiche des Klärschlammbettes, also nach Erreichen erträglicher Belastungswerte, abgetragen und die darunterliegenden Schichten in erfindungsgemäßer Weise entgiftet werden.

Insbesondere zur Trocknung des gewöhnlich sehr nassen Klärschlammes wird vor dem Auslegen auf das wasserundurchlässige Feld eine Schicht aus Stroh, Moos oder Reisig ausgebreitet, die den Wasserabfluß begünstigt und im Verlauf einer zu erwartenden Zersetzung ebenfalls zum Abbau von Schadstoffen beiträgt. Eine derartige Bettvorbereitung ist später Bestandteil des entgifteten Klärschlammes, ohne daß sie noch besonders in Erscheinung tritt. Bei gutem Trocknungsfortschritt kann die Bettvorbereitung bei der ersten Durchpflügung bereits mit erfaßt werden, die sich an das Entfernen der ersten Bepflanzung anschließt. In den Sommermonaten ist das Entfernen des ersten Bewuchses und das Umpflügen ca. zwei bis drei Monate nach dem Auslegen des Klärschlammes und nach der sofortigen Bepflanzung zu erwarten.

Sobald die Schadstoffkonzentration in dem Klärschlamm oder in Teilen des Klärschlammes auf ein für die Landwirtschaft und für die Forstwirtschaft erträgliches Maß abgesunken ist , kommt auch eine Lagerung auf natürlichem Boden in Frage, womit einem tierischen Abbau durch Würmer und sonstige niedere Lebewesen Vorschub geleistet wird. Hierbei ist allerdings darauf zu achten, daß durch den Beitrag, der durch die tierischen Lebewesen geleistet wird, an dieser Stelle keine Resorption eintritt, sondern lediglich ein Abbau, damit nicht ungewollte Schadstoffkonzentrationen im Bereich dieser tierischen Lebewesen entstehen.

Nach einer beispielsweise dreimaligen Bepflanzung kann bei nicht allzu hoher Schadstoffbelastung ein Klärschlammbeet von anfangs 50 cm Dicke soweit entgiftet sein, daß die landwirtschaftliche oder forstwirtschaftliche Nutzung möglich ist. Die dann eher als Düngerkonzentrat oder energiereicher Kompost zu bezeichnende Masse kann mit pflanzlichen Keimen noch so weit angefüllt sein, daß die Ausbreitung auf einem normalen Boden das sofortige Sprießen der bei der Entgiftung entstandenen Samen zur Folge hätte. Um dieser Erscheinung zu begegnen, wird diese Masse nach der eigentlichen Entgiftung mit einer Folie annähernd luftdicht abgeschlossen, was das endültige Ausfaulen und damit Absterben aller pflanzlichen Keime zur Folge hat. Nach dieser Behandlung steht ein sehr guter Dünger zur Verfügung, der frei von lästigen Eigenkeimen ist.

0123985

3585 KA/Be

Patentanwälte
Wenzel & Kalkoff
Ruhrstraße 26
Postfach 2448
5810 Witten/Ruhr

P a t e n t a n s p r ü c h e

1. Verfahren zur Entgiftung von Klärschlamm, dadurch
   g e k e n n z e i c h n e t, daß der Klärschlamm
   auf einer wasserundurchlässigen, entwässerbaren
   Fläche zur Trocknung abgelegt wird, daß in den
   Klärschlamm pflanzliche Lebewesen eingepflanzt und/
   oder eingesät werden, daß nach einer vorgegebenen,
   insbesondere durch den Aufwuchs bestimmten Zeit der Bewuchs im wesentlichen rückstandslos entfernt wird,
   und daß anschließend die Bewachsung gegebenenfalls
   mehrmals wiederholt wird.

2. Verfahren nach Anspruch 1, dadurch g e k e n n -
   z e i c h n e t, daß der sich an den ersten Bewuchs
   anschließende Bewuchs noch vor der Entfernung des
   ersten in den Klärschlamm eingepflanzt bzw. -gesät wird.

3. Verfahren nach Anspruch 1 oder 2, dadurch g e k e n n -
   z e i c h n e t, daß Teile des Bewuchses in den Klärschlamm eingearbeitet werden.

4. Verfahren nach einem der vorhergehenden Ansprüche,
   dadurch g e k e n n z e i c h n e t, daß auf die
   Fläche vor dem Aufbringen des Klärschlammes eine
   Lage Stroh, Moos oder eine sonstige pflanzliche
   Filter- und Kompostierschicht aufgebracht wird.

5. Verfahren nach einem der vorhergehenden Ansprüche, dadurch g e k e n n z e i c h n e t, daß das Entfernen des Bewuchses durch Ausreißen oder durch den Einsatz von Erntemaschinen bewirkt wird.

6. Verfahren nach einem der vorhergehenden Ansprüche, dadurch g e k e n n z e i c h n e t, daß die entfernten Pflanzen vernichtet, beispielsweise verbrannt werden.

7. Verfahren nach einem der vorhergehenden Ansprüche, dadurch g e k e n n z e i c h n e t, daß die hauptsächlichen Belastungsstoffe des Klärschlamms festgestellt werden, und daß die pflanzlichen Lebewesen nach ihrer bevorzugten Nahrungsaufnahme so ausgesucht und zur Bepfalnzung eingesetzt werden, daß ein möglichst großer Teil der Belastungsstoffe von dem Klärschlamm in die Pflanzen übergeht.

8. Verfahren nach einem der vorhergehenden Ansprüche, dadurch g e k e n n z e i c h n e t, daß die vorgegebene Zeitperiode zwischen der Bepflanzung und der Entfernung zwei bis drei Monate beträgt.

9. Verfahren nach einem der vorhergehenden Ansprüche, dadurch g e k e n n z e i c h n e t, daß im Anschluß an die Entgiftung der Klärschlamm zum endgültigen Ausfaulen aller pflanzlichen Reste mit einer Folie abgedeckt wird.

10. Verfahren nach einem der vorhergehenden Ansprüche, dadurch g e k e n n z e i c h n e t, daß ab einer für die Land- und Forstwirtschaft erträglichen Belastungskonzentration der Schadstoffe der Klärschlamm auf natürlichem Boden gelagert wird.

11. Verfahren nach einem der vorhergehenden Ansprüche, dadurch g e k e n n z e i c h n e t, daß solche Pflanzen bevorzugt werden, die starke Holz- und Faserbildner und stark fruchtend sind.

12. Verfahren nach Anspruch 11, dadurch g e k e n n - z e i c h n e t, daß als pflanzliche Lebewesen Senf, Hanf, Brennessel, Sonnenblume, Lupine, Mais, Kürbis, Kamille, Wermut oder sonstige Teearten, Erlen, Getreide, Hülsenfrüchte sowie Büsche und Sträucher gesondert oder beliebig kombiniert verwendet werden.

13. Verfahren nach einem der vorhergehenden Ansprüche, dadurch g e k e n n z e i c h n e t, daß die mit dem Klärschlamm belegte Fläche unter einem Foliengewölbe oder in einem Gewächshaus ausgelegt wird.